# EUROPEAN PATENT SPECIFICATION

(11) **EP 0 945 622 B1**
(45) Date of publication and mention of the grant of the patent: **21.07.2004**
(21) Application number: 99105937.9
(22) Date of filing: 24.03.1999
(51) Int. Cl.: F04D 13/02, H02K 7/118

(54) **Synchronous electric pump with silencing device**
Synchronmotorpumpe mit Schalldämpfereinrichtung
Pompe à moteur éléctrique synchrone avec silencieux

(30) Priority: 27.03.1998 IT MC980014 U
(43) Date of publication of application: 29.09.1999
(73) Proprietor: PMP S.P.A., 20123 Milano (IT)
(72) Inventor: Sante, Blasi, 60044 Fabriano (AN) (IT)
(74) Representative: Forattini, Amelia

(56) References cited:
- EP-A- 0 514 272
- EP-A- 0 723 329
- WO-A-94/21026
- DE-A- 4 232 939
- DE-A- 4 424 257

## Description

The present invention relates to a low-power electric pump, driven by a two-pole synchronous motor, which is provided with a silencing device adapted to eliminate the typical ticking that this kind of pump produces when starting.

The pump according to the invention is normally installed in household washing machines to discharge the washing water.

In order to better comprehend the innovative features of the pump according to the invention, it is necessary to briefly describe the structural configuration and the operating methods of currently commercially available equivalent models.

In this pump, the impeller, of the type with radial vanes, is not rigidly coupled to the shaft but has a hub which accommodates a special bush which is directly fixed to the shaft of the synchronous motor; more specifically, the bush has a tooth which is adapted to cooperate with a complementary tooth formed inside the hub of the impeller.

In other words, transmission of the motion from the shaft of the synchronous motor to the impeller is not direct but occurs by means of the tooth of the bush, which causes rotation of the impeller by interfering with the complementary tooth of the hub.

The activation of the pump every time the synchronous motor starts produces a brief transient, during which the shaft repeatedly and suddenly reverses its direction of rotation, producing an unpleasant beating noise due to the successive impacts that occur between the tooth and the complementary tooth.

EP-A-0723329 discloses a start-up device, for the rotor of a permanent-magnet synchronous motor, provided with a shock-absorbing element which at least partially overcomes the above cited inconvenience.

The aim of the present invention is to eliminate this noise by introducing a silencing device in the pump.

This aim has been achieved by a low-power electric pump as claimed in the appended claims, wherein the bush is eliminated and the impeller is keyed directly to the shaft, which in turn has been allowed to rotate freely with respect to the rotor of the synchronous motor.

Transmission of the motion from the rotor to the shaft occurs by means of a tooth which is provided in a circular seat formed at one end of the supporting sleeve of the permanent magnet, which in practice constitutes the rotor of the synchronous motor; the tooth is designed to cooperate with a complementary tooth which is formed externally with respect to a collar fitted on the shaft and locked thereon and is adapted to be inserted in the seat, which also accommodates a rubber fitting adapted to cushion and silence the impacts between the tooth and the complementary tooth.

In other words, when the rotor starts rotating, the tooth formed in the seat of the sleeve interferes with the complementary tooth formed on the collar, which accordingly rotates together with the shaft whereto both the collar and the impeller are rigidly coupled.

As mentioned, the impact between the tooth and the complementary tooth is not accompanied by any beating thanks to the silencing action of the rubber fitting interposed between them.

Further characteristics and advantages of the present invention will become apparent from the following detailed description of an embodiment according to the invention, illustrated only by way of non-limitative example in the accompanying drawings, wherein:

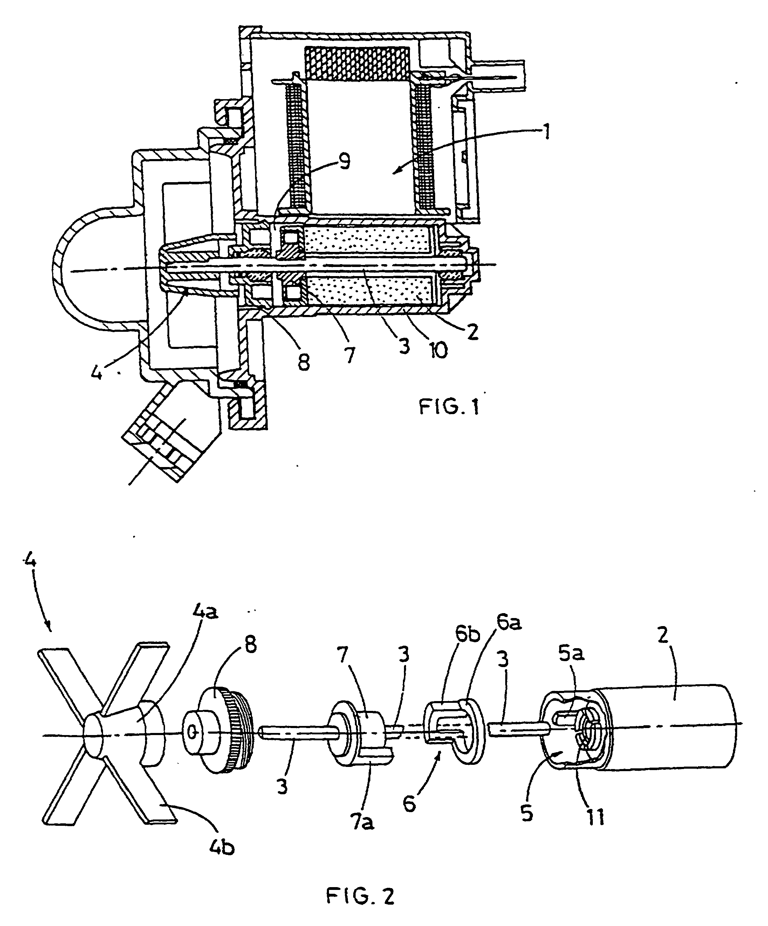

Figure 1 is a sectional view of the pump according to the present invention, taken along a plane which passes through the rotation axis of the shaft of the synchronous motor;
Figure 2 is an exploded perspective view of the various components involved in the transmission of motion from the rotor to the impeller of the electric pump according to the invention.

With reference to the above figures, the pump according to the invention includes a synchronous two-pole motor 1, the rotor 2 of which is not rigidly coupled to the shaft 3; the hub 4a of the impeller 4, of the type with radial vanes 4b, is instead fixed to the shaft.

A circular seat 5 is provided at the end of the sleeve that supports the permanent magnet that constitutes the rotor 2; a tooth 5a is formed on the internal wall of the seat and is in turn accommodated in a special rubber fitting 6, which is formed by a ring 6a adapted to fit in the bottom of the seat 5 and by a U-shaped portion 6b which is suitable to snugly accommodate the tooth 5a.

A traction collar 7, whose dimensions allow to insert it in the seat 5, is fitted and fixed on the shaft 3 and is externally provided with a complementary tooth 7a which, during the rotation of the rotor 2, is subjected to the thrust of the tooth 5a; the impact between the tooth 5a and the complementary tooth 7a is cushioned and silenced by the rubber U-shaped portion 6b interposed between them.

The reference numeral 8 designates the plug by means of which the chamber 9 formed in the body 10 of the electric pump is closed hermetically; the rotor 2 is accommodated and rotates therein in a conventional manner.

Finally, it should be observed that the shaft 3 moves with a slight friction inside the rotor 2, so as to prevent the shaft 3 from starting to vibrate freely and prevent the impact of the tooth 5a against the complementary tooth 7a from being excessively harsh and heavy for the fitting 6.

The friction engagement is provided by means of a rubber ring 11 which is accomodated within the seat 5 at the inlet of the axial channel in which the shaft 3 is inserted through the rotor 2.

In practice, the materials employed, so long as they are compatible with the specific use, as well as the dimensions, may be any according to requirements and to the state of the art.

## Claims

1. A synchronous electric pump provided with a silencing device comprising a two-pole synchronous electric motor (1) which rotates a shaft (3) whereto the impeller (4) of the pump is fixed, a circular seat (5) being provided at the end of the sleeve that supports the permanent magnet that constitutes the rotor (2), a tooth (5a) being provided on the internal wall of said seat and being accommodated in a special rubber fitting (6) and being designed to cooperate with a complementary tooth (7a) which is formed externally to a driving collar (7) fixed along the shaft (3) and whose dimensions allow to insert it in said seat (5); **characterized in that** said rubber fitting (6) is formed by a ring (6a), which is adapted to fit in the bottom of the seat (5), and by a U-shaped portion (6b), which is adapted to snugly accommodate said tooth (5a).

2. The synchronous electric pump provided with a silencing device, according to claim 1, **characterized in that** the shaft (3) engages with slight friction inside the rotor (2) by means of a rubber ring (11) which is accommodated within said seat (5) at the inlet of the axial channel in which the shaft (3) is inserted through the rotor (2).

## Patentansprüche

1. Synchronmotorpumpe mit einer Schalldämpfereinrichtung, welche
einen zweipoligen elektrischen Synchronmotor (1), der eine Achse (3) antreibt, an der das Flügelrad (4) der Pumpe befestigt ist,
einen kreisförmigen Sitz (5), welcher an dem Ende der Hülse befestigt ist, die den den Rotor (2) bildenden Permanentmagneten trägt und
einen Zahn (5a), welcher an der inneren Wandung des Sitzes vorgesehen ist und in einem speziellen Gummianschlußstück (6) aufgenommen ist und dazu ausgebildet ist, mit einem komplementären Zahn (7a) zusammenzuwirken, welcher außerhalb einer Antriebsmanschette (7) ausgebildet ist, die entlang der Achse (3) befestigt ist und deren Abmessungen es ermöglichen, sie in den Sitz (5) einzusetzen,
aufweist, **dadurch gekennzeichnet, daß**
das Gummianschlußstück (6) durch einen Ring (6a), welcher dazu vorgesehen ist in den Boden des Sitzes (5) zu passen, und durch einen U-förmigen Bereich (6b) ausgebildet ist, welcher dazu vorgesehen ist, den Zahn (5a) passend aufzunehmen.

2. Synchronmotorpumpe mit Schalldämpfereinrichtung gemäß Anspruch 1, **dadurch gekennzeichnet, daß** die Achse (3) mit einer leichten Reibung im Inneren des Rotors (2) mittels eines Gummirings (11) eingreift, welcher innerhalb des Sitzes (5) an dem Einlaß des axialen Kanals, in welchem die Achse (3) durch den Rotor (2) eingesetzt ist, aufgenommen ist.

## Revendications

1. Pompe électrique synchrone munie d'un silencieux comportant un moteur électrique synchrone bipolaire (1) qui fait tourner un arbre (3) auquel est fixée la roue (4) de la pompe, un siège circulaire (5) étant prévu au niveau de l'extrémité du manchon qui supporte l'aimant permanent qui constitue le rotor (2), une dent (5a) étant prévue sur la paroi intérieure dudit siège et étant reçue dans un élément en caoutchouc spécial (6) et étant conçue pour coopérer avec une dent complémentaire (7a) qui est formée extérieurement à un collier d'entraînement (7) fixé le long de l'arbre (3), et dont les dimensions permettent de l'insérer dans ledit siège (5), **caractérisée en ce que** ledit élément en caoutchouc (6) est formé par un anneau (6a), qui est adapté pour s'adapter dans le fond du siège (5), et par une partie en forme de U (6b), qui est adaptée pour recevoir à jeu réduit ladite dent (5a).

2. Pompe électrique synchrone munie d'un silencieux selon la revendication 1, **caractérisée en ce que** l'arbre (3) est engagée avec un léger frottement à l'intérieur du rotor (2) par l'intermédiaire d'un anneau en caoutchouc (11) qui est reçu dans ledit siège (5) au niveau de l'entrée du canal axial dans lequel l'arbre (3) est inséré à travers le rotor (2).
